# EUROPÄISCHE PATENTANMELDUNG

(11) **EP 4 001 327 A1**
(43) Veröffentlichungstag der Anmeldung: **25.05.2022**
(21) Anmeldenummer: 20206887.0
(22) Anmeldetag: 11.11.2020
(51) Int. Cl.: C08F 222/10, C08K 3/32, C08K 5/13, C08K 5/18, C08L 35/02, C08F 290/06, C08K 5/092, C04B 26/06, C08F 222/02

(54) **ZWEIKOMPONENTEN-MÖRTELMASSE**

(71) Anmelder: Hilti Aktiengesellschaft, 9494 Schaan (LI)
(72) Erfinder: Bürgel, Thomas, 86899 Landsberg (DE)
(74) Vertreter: Hilti Aktiengesellschaft Corporate Intellectual Property

(57) **Zusammenfassung**

Eine Zweikomponenten-Mörtelmasse umfasst eine härtbare Harzkomponente und eine getrennt angeordnete Härterkomponente, wobei die härtbare Harzkomponente ein radikalisch polymerisierbares Harz, einen phenolischen Inhibitor und einen Gelierzeitstabilisator mit wenigstens einer Säurefunktionalität umfasst, und wobei die Härterkomponente ein Peroxid umfasst.

Ferner wird eine Zweikomponenten-Mörtelmasse mit einem säurefunktionalisierten radikalisch polymerisierbarem Harz angegeben.

## Beschreibung

Die Erfindung betrifft eine Zweikomponenten-Mörtelmasse.

Zur sicheren Befestigung von Bauteilen, wie Ankergewindestangen, Bewehrungseisen, Gewindehülsen und Schrauben, in einem mineralischen Untergrund wie Beton, Naturstein oder Putz werden zunächst die Bohrlöcher zur Aufnahme der zu befestigenden Bauteile mit den entsprechenden Abmessungen in den mineralischen Untergrund gebohrt. Anschließend werden die Bohrlöcher von Bohrstaub befreit, und eine Zweikomponenten-Mörtelmasse wird nach Vermischen einer Harzkomponente mit einer Härterkomponente der Zweikomponenten-Mörtelmasse in das Bohrloch eingebracht. Danach wird das zu befestigende Bauteil in das mit der Mörtelmasse angefüllte Bohrloch eingeführt und justiert. Nach dem Aushärten der Mörtelmasse durch Umsetzung der Harzkomponente mit der Härterkomponente wird ein fester Halt des Bauteils im mineralischen Untergrund erreicht.

Zweikomponenten-Mörtelmassen weisen den Vorteil auf, dass die Harz- und Härterkomponente nicht aushärten solange die beiden Komponenten nicht miteinander in Kontakt gebracht werden. Somit eignen sich Zweikomponenten-Mörtelmassen in besonderer Weise dazu, über einen längeren Zeitraum bevorratet zu werden.

Harzmischungen, die eine zur Beschleunigung der Polymerisationsreaktion fähige Verbindung, die dazu dient, die Bildung des Radikalstarters zu beschleunigen, enthalten, den sogenannten Beschleuniger, bedürfen des Zusatzes von zur Inhibierung der Polymerisationsreaktion fähigen Verbindungen, die dazu dienen, die Polymerisationsreaktion und damit ein unerwünschtes vorzeitiges Polymerisieren der radikalisch polymerisierbaren Verbindung während der Lagerung durch Abfangen gebildeter Radikale zu vermeiden, den Polymerisationsinhibitoren (auch kurz als Inhibitoren bezeichnet). Als Inhibitoren werden üblicherweise unterschiedliche Verbindungen verwendet, welche den radikalisch härtbaren Verbindungen in Mengen von 20 ppm bis 1000 ppm zugesetzt werden. Einige dieser Inhibitoren lassen sich auch zur Einstellung der Gelzeit verwenden, das heißt zu einer gezielten Verzögerung des Starts der Polymerisation nach dem Vermischen der den Beschleuniger enthaltenden Harzmischung oder diese enthaltenden Reaktionsharzmörtel mit dem Härter. Allerdings müssen hierzu die Mengen der Inhibitoren, insbesondere wenn Beschleuniger eingesetzt werden, in Abhängigkeit von der angestrebten Gelzeit deutlich auf bis zu 5000 ppm und mehr erhöht werden. Als Inhibitoren dieser Art werden üblicherweise phenolische Verbindungen eingesetzt, wie Hydrochinon, p-Methoxyphenol, 4-tert-Butylbrenzcatechin, 2,6-Di-tert-butyl-4-methylphenol oder 2,4-Dimethyl-6-tert-butylphenol, oder stabile Nitroxylradikale, wie 4-Hydroxy-2,2,6,6,-tetramethylpiperidin-1-oxyl (Tempol).

Die Gelierzeit oder Gelzeit ist ein Maß für die Zeit, die eine Reaktionsharzmischung (auch Reaktivharzmischung oder nur Harzmischung genannt) nach Zugabe eines Härtungsmittels (hierin auch als Härter bezeichnet) und optional eines Beschleunigers bei einer bestimmten Temperatur benötigt, um in den Gelzustand überzugehen. Die Gelierzeit oder Gelzeit ist aber auch ein Maß für die Zeit, die eine Harzkomponente (auch Reaktiv- oder Reaktionsharzkomponente genannt) nach Zugabe eines Härters bzw. einer den Härter enthaltenden Härterkomponente und optional eines Beschleunigers bei einer bestimmten Temperatur benötigt, um in den Gelzustand überzugehen. Bei der Weiterverarbeitung einer Reaktionsharzmischung zur Harzkomponente (des Reaktionsharzmörtels) ist es wichtig, dass die Reaktionsharzmischung eine gewisse Gelierzeit aufweist, um dann die richtige Gelierzeit des Mörtels zu gewährleisten. Die Gelierzeit ist daher eine entscheidende Größe in der Anwendung von derartigen Reaktionsharzmischungen, insbesondere bei deren Verwendung in Zweikomponenten-Mörtelmassen.

Die phenolischen Verbindungen, vor allem jene, welche sich aufgrund ihrer Reaktivität besonders gut als Inhibitor für die vorzeitige Polymerisation der angesprochenen Reaktionsharze eignen, wie z.B. Hydrochinon, Brenzkatechin, und deren alkylsubstituierten Derivate wie z.B. 4-tert-Butylbrenzcatechin, Methylhydrochinon und dergleichen besitzen jedoch den Nachteil, dass sie durch Luftsauerstoff deaktiviert werden, was während der Lagerung eines entsprechend inhibierten Systems zum schleichenden Verlust der inhibierenden Wirkung führt. Diese Deaktivierung verstärkt sich in Gegenwart alkalischer Medien, also beispielsweise alkalisch wirkenden Füllstoffen, wie Zement, was bei Mörtelmassen mit anorganischen Füllstoffen oder bei organisch-anorganischen Hybridmörteln problematisch werden kann. Die Deaktivierung des Inhibitors hat zur Folge, dass die Gelzeit auf unakzeptabel kurze Zeiten absinkt, die Harze bzw. Mörtelmassen somit einen großen Gelzeitdrift während der Lagerung vor dem Gebrauch zeigen.

Zur Verhinderung eines solchen Gelzeitdrifts schlägt die Anmeldung DE 195 31 649 A1 vor, den eigentlich hervorragend geeigneten Inhibitor 4-tert-Butylbrenzkatechin durch stabile Nitroxylradikale, wie Piperidinyl-N-oxyl oder Tetrahydropyrrol-N-oxyl zu ersetzen. Diese sind einigermaßen gelzeitstabil. Allerdings hat sich gezeigt, dass diese Inhibitoren zu einer überproportional starken Inhibierung der Polymerisationsreaktion bei tiefen Temperaturen führen und diese Inhibitoren enthaltende Reaktionsharze einer starken Oberflächeninhibierung durch Luftsauerstoff unterliegen, was zu einer ungenügenden Robustheit der Aushärtung führt. Ferner wird vermutet, dass Saeurespuren, die zum Beispiel in den Vorstufen der radikalisch härtbaren, ethylenisch ungesättigten Verbindungen, wie polymeres Methylendiphenyldiisocyanat bei Urethan(meth)acrylat-Harzen, enthalten sein können, zur Disproportionierung der Nitroxylradikale und damit zu deren Inaktivierung führen.

Sterisch gehinderte Phenole, wie 2,6-Di-tert-butyl-4-methylphenol und 2,4-Dimethyl-6-tert-butylphenol verhalten sich zwar deutlich stabiler im Hinblick auf den Gelzeitdrift und führen auch zu einer geeigneten Inhibierung der Polymerisation bei Raumtemperatur. Jedoch ist bei tiefen Temperaturen die Qualität des ausgehärteten Harzes und damit die Auszugsfestigkeit eines mit Hilfe eines solchen inhibierten Reaktionsharzes gesetzten Dübels unbefriedigend. Weiterhin ist festzustellen, dass die Mehrzahl der zur Stabilisierung der Harze eingesetzten Verbindungen sich überhaupt nicht als Mittel zur Einstellung der Gelzeit eignen, also als Inhibitor, da sie in größeren Mengen, wie sie zur Einstellung der Gelzeit erforderlich sind, als Retarder wirken, d.h. die Polymerisation und somit die mechanischen Endeigenschaften des Polymers empfindlich beeinträchtigen. Sie dienen daher im Wesentlichen zur Stabilisierung des Harzes, d.h. der Lagerstabilität.

Zur Lösung des Problems der mangelhaften Härtungsgeschwindigkeit und Durchhärtung bei tiefen Temperaturen schlägt die Anmeldung EP 1 935 860 A1 vor, den stark aktivierenden tert-Butylrest des 4-*tert*-Butylbrenzkatechins durch weniger stark aktivierende Reste zu ersetzen, wodurch eine ausreichende Inhibitorqualität bei signifikant geringerem Gelzeitdrift und ein hohes Leistungsniveau sowie eine hohe Robustheit der Zweikomponenten-Reaktionsharze auch bei tiefen Aushärtetemperaturen erzielt werden kann.

Das Brenzkatechin und dessen Derivate sind zwar sehr effiziente Inhibitoren zur Einstellung der Gelzeit, auch bei tiefen Temperaturen, neigen aber stark zur Autoxidation, was im alkalischen Milieu verstärkt wird, und somit wiederum zum Driften der Gelzeit.

Um das Problem der Autooxidation des Inhibitors und damit dem Driften der Gelzeit zu lösen, schlägt die EP 2 532 636 A2 die Verwendung von 3-Pyrimidinol- und 5-Pyrimidinol-Derivaten zur Einstellung der Reaktivität und der Gelzeit von Reaktionsharzmischungen und/oder Reaktionsharzmörteln auf Basis von radikalisch polymerisierbaren Verbindungen vor.

Außerdem schlägt die EP 2 532 632 A2 die Verwendung einer Mischung aus 5-Pyrimidinol-Cerivaten mit sterisch gehinderten Phenolderivaten zur Einstellung der Reaktivität und der Gelzeit von Reaktionsharzmischungen und Reaktionsharzmörteln auf der Basis von radikalisch polymerisierbaren Verbindungen vor.

Es hat sich gezeigt, dass die Harzkomponente in derartigen Mörtelmassen, die phenolische Inhibitoren enthalten, trotz der eingangs beschriebenen Maßnahmen, nach längerer Lagerungszeit eine Gelzeitdrift aufweist. Dies bedeutet, dass sich die Gelierzeit der Zweikomponenten-Mörtelmasse in Abhängigkeit der Lagerungszeit verändern kann. Dies stellt einen Nachteil in der Anwendung derartiger Zweikomponenten-Mörtelmassen dar, da sich deren Verhalten beim Aushärten der Zweikomponenten-Mörtelmasse für einen Anwender nicht zuverlässig abschätzen lässt. Um einschätzen zu können, welchen Einfluss die Lagerungszeit auf die Gelierzeit hat, müssten aufwändige und daher kostenintensive Testreihen durchgeführt werden.

Die Aufgabe der Erfindung ist es, eine Zweikomponenten-Mörtelmasse bereitzustellen, welche die obigen Probleme behebt.

Die Aufgabe wird erfindungsgemäß gelöst durch die Bereitstellung einer Reaktionsharzmischung, die ein radikalisch polymerisierbares Harz, einen phenolischen Inhibitor und einen Gelierzeitstabilisator mit wenigstens einer Säurefunktionalität umfasst, sowie durch deren Verwendung in einer Harzkomponente für eine Zweikomponenten-Mörtelmasse, mit einer härtbaren Harzkomponente und einer getrennt angeordneten Härterkomponente, wobei die Härterkomponente ein Peroxid umfasst.

Als Gelierzeitstabilisator wird hier eine Verbindung verstanden, welche die Gelierzeit nach Lagerung der Zweikomponenten-Mörtelmasse über wenigstens 30 Tage, insbesondere über wenigstens 60 Tage in einem Bereich von ± 10 % einer Ausgangs-Gelierzeit hält, wobei die Ausgangs-Gelierzeit die Gelierzeit der Zweikomponenten-Mörtelmasse vor der Lagerung ist.

Es wurde erkannt, dass sich eine entsprechende Stabilisierung der Gelierzeit bei Reaktionsharzmörteln, die phenolische Inhibitoren enthalten, über einen Gelierzeitstabilisator mit wenigstens einer Säurefunktionalität auf einfache Weise erzielen lässt. Somit können die hinsichtlich ihrer positiven Einflussnahme auf die Eigenschaften der gehärteten Mörtelmasse, wie etwa Leistungsfähigkeit und Robustheit, bevorzugten phenolischen Inhibitoren weiterhin eingesetzt werden und es müssen gegebenenfalls keine weiteren Inhibitoren zugesetzt werden, die einen höheren Aufwand hinsichtlich der Bestimmung der benötigten Menge an Inhibitor zur Folge hätten.

Ohne an eine bestimmte Theorie gebunden zu sein, wird davon ausgegangen, dass der phenolische Inhibitor in den Reaktionsharzmischungen teilweise als Phenolat vorliegt, das oxidationsempfindlicher ist als das Phenol selbst. Durch die Säure wird das Gleichgewicht in Richtung Phenol verschoben wodurch sich eine erhöhte Lagerstabilität für den Reaktionsharzmörtel ergibt, der die erfindungsgemäße Reaktionsharzmischung enthält.

Ein erster Gegenstand der Erfindung ist eine Reaktionsharzmischung mit einem radikalisch polymerisierbaren Harz, einem phenolischen Inhibitor und einem Gelierzeitstabilisator mit wenigstens einer Säurefunktionalität.

Der Gelierzeitstabilisator umfasst insbesondere eine wenigstens difunktionelle organische Säure und/oder eine wenigstens zweiprotonige anorganische Säure und/oder lösliche Oligomere oder (Co)polymere, die jeweils saure Gruppen wie Carboxylat- oder Phosphatgruppen tragen.

Beispielsweise ist der Gelierzeitstabilisator ausgewählt aus der Gruppe bestehend aus Itakonsäure, Maleinsäure, Zitronensäure, Phosphorsäure und Kombinationen davon.

Besonders bevorzugt umfasst der Gelierzeitstabilisator Itakonsäure, oder der Gelierzeitstabilisator ist Itakonsäure. Itakonsäure ist weltweit kostengünstig verfügbar und lässt sich gut in üblichen Formulierungen für Harzkomponenten einarbeiten.

Der Gelierzeitstabilisator liegt insbesondere in einem Anteil von 0,05 bis 1 Gewichtsprozent in der härtbaren Harzkomponente vor, bezogen auf die Gesamtmasse der organischen Bestandteile der härtbaren Harzkomponente und somit der Reaktionsharzmischung, bevorzugt in einem Anteil von 0,05 bis 0,8 Gewichtsprozent.

Es hat sich gezeigt, dass derartig niedrige Anteile an Gelierzeitstabilisator ausreichen, um eine hinreichende Stabilisierung der Gelierzeit zu erreichen, insbesondere bei Verwendung der zuvor beschriebenen Gelierzeitstabilisatoren, beispielsweise Itakonsäure. Auf diese Weise hat der Gelierzeitstabilisator nur unwesentlichen Einfluss auf die weiteren Eigenschaften der Zweikomponenten-Mörtelmasse, beispielsweise der Haftfestigkeit der ausgehärteten Zweikomponenten-Mörtelmasse, sodass bereits bekannte Formulierungen auf einfache Weise angepasst werden können.

Geeignete radikalisch härtbare ungesättigte Verbindungen als Reaktionsharz sind ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Ganz besonders bevorzugt sind Vinylesterurethanharze, insbesondere Urethanmethacrylate. Zu diesen zählen als bevorzugte Harze die in der DE 10 2011 017 626 B4 beschriebenen Urethanmethacrylatharze. Diesbezüglich wird auf die DE 10 2011 017 626 B4, und vor allem auf die Beschreibung der Zusammensetzung dieser Harze, insbesondere in den Beispielen der DE 10 2011 017 626 B4, verwiesen.

Besonders bevorzugt ist die radikalisch härtbare, ethylenisch ungesättigte Verbindung, das Reaktionsharz, eine Verbindung auf Urethan(meth)acrylatbasis, Epoxy(meth)acrylatbasis, ein Methacrylat eines alkoxylierten Bisphenols oder auf Basis weiterer ethylenisch ungesättigter Verbindungen.

Beispiele geeigneter ungesättiger Polyester, die erfindungsgemäß verwendet werden können, werden in folgende Kategorien eingeteilt, wie sie durch M. Malik et al. in J. M. S. - Rev. Macromol. Chem. Phys., C40 (2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in der DE 102011017 626 B4 beschriebenen Urethanmethacrylatharze (die auch als Vinylesterurethanharze bezeichnet werden).

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist.

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, und Neopentylglykolmono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen. Acrylsäure ist wegen ihrer geringeren Alkalistabilität weniger bevorzugt als am Kohlenwasserstoffrest substituierte Acrylsäuren.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Reaktionsharze, die erfindungsgemäß als radikalisch härtbare ungesättigte Verbindungen verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Reaktionsharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Der Begriff "...(meth)acrylat..." umfasst Acrylate, Methacrylate und Copolymere von Acrylaten und Methacrylaten.

Erfindungsgemäß enthalt die Reaktionsharzmischung einen phenolischen Inhibitor. Dieser phenolische Inhibitor ist bevorzugt aus der Gruppe bestehend aus Phenolen, Hydrochinon und Derivaten davon, Benzochinon und Derivaten davon, Naphtochinon, Brenzkatechin und Derivaten davon, 3-Pyridinol-Derivaten, 5-Pyrimidinol-Derivaten, und Kombinationen davon ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol); 1,3,5-Trimethyl-2,4,6-tris(3,5-di-tert-butyl-4-hydroxybenzyl)benzol; 2,2'-Methylen-di-p-cresol; Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon; Benzochinon und Derivate davon, wie 2,3,5,6-Tetrachloro-1,4-benzochinon, Methylbenzochinon, 2,6-Dimethylbenzochinon, Naphthochinon; oder Gemische von zweien oder mehreren davon, geeignet.

Weiterhin als phenolische Inhibitoren sind Brenzkatechin und Brenzcatechinderivate der allgemeinen Formel (I) geeignet: 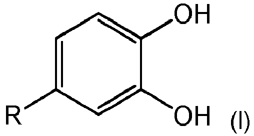 enthält, in der R ein Wasserstoffatom, eine gegebenenfalls hydroxy-, alkoxy- oder alkylamino-substituierte Methyl-, Ethyl-, n-Propyl-, iso-Propyl-, n-Butyl-oder iso-Butylgruppe, eine Gruppe der Formeln R¹OOC-, R¹O-, R₁NH- oder R¹R²N-, worin R¹ und R² unabhängig voneinander gegebenenfalls hydroxysubstituierte Alkylgruppen mit 1 bis 4 Kohlenstoffatomen darstellen, eine Aldehydgruppe, eine Polyoxyalkylengruppe der Formel (II): 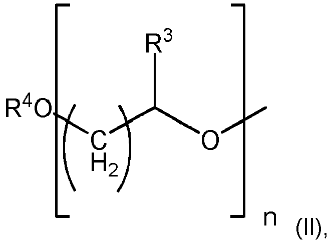 in der m eine ganze Zahl mit einem Wert von 1 bis 3, n eine ganze Zahl mit einem Wert von 1 bis 50, R³ ein Wasserstoffatom oder eine Methylgruppe und R⁴ ein Wasserstoffatom, eine Alkylgruppe mit 1 bis 4 Kohlenstoffatomen oder eine Gruppe der Formel (III): 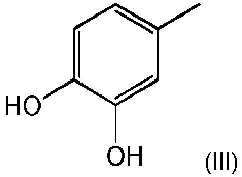 darstellen, bedeutet, wie sie in der EP 1 935 860 A2 beschrieben sind. Darunter sind Brenzcatechin, 3,4-Dihydroxybenzaldehyd, 4-Methylbrenzcatechin, 4-Methoxybrenzcatechin, 4-tert-Butylbrenzkatechin, 4,6-Di-tert-butylbrenzkatechin bevorzugt.

Ferner sind 3-Pyridinol- und 5-Pyrimidinol-Verbindungen der allgemeinen Formel (IV) oder (V) 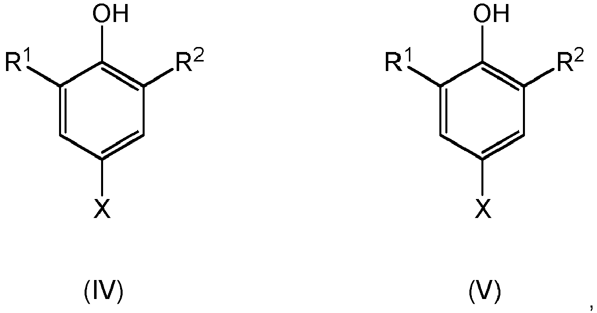 in denen R¹ und R² jeweils unabhängig voneinander Wasserstoff oder eine verzweigte oder unverzweigte C₁-C₂₀-Alkylgruppe ist und X eine beliebige elektronenschiebende Gruppe ist, als Inhibitoren geeignet, wie sie in der EP 2 532 636 A2 beschrieben sind.

Die elektronenschiebende Gruppe X kann jede Gruppe sein, die entweder direkt oder über Konjugation oder Hyperkonjugation Elektronendichte in den aromatischen Ring schieben und damit die OH-Gruppe für den Wasserstofftransfer auf freie Radikale, bevorzugt auf Alkylradikale, wie sie bei der radikalischen Polymerisation auftreten, aktivieren kann und gleichzeitig zur Löslichkeit der 5-Pyrimidinol- bzw. 3-Pyridiniol-Verbindungen beiträgt, da sich diese aufgrund ihrer hohen Polarität unter Umständen nicht ausreichend in Methacrylatharzen, welche eine mittlere bis geringe Polarität aufweisen, lösen, wobei Alkoxy-, Amino-, N-Alkylamino- oder N,N-Dialkylamino-Gruppen bevorzugt sind. Insbesondere stellt X -OR³, -NH₂, -NHR³ oder -NR³₂ dar, wobei R³ eine unverzweigte oder verzweigte C₁-C₂₀-Alkylgruppe oder eine C₂-C₄-Polyalkylenoxid-Kette, wie Polyethylenoxid oder Polypropylenoxid, darstellt, bevorzugt eine unverzweigte oder verzweigte C₁-C₈-Alkylgruppe, besonders bevorzugt Methyl oder n-Octyl.

Die Reste R¹ und R² in Formel (IV) und (V) sind unabhängig voneinander Wasserstoff, eine verzweigte oder unverzweigte C₁-C₈-Alkylgruppe, bevorzugt Methyl, iso-Propyl oder *tert*-Butyl.

Besonders bevorzugt ist als Verbindung der Formel (IV) und (V) eine Verbindung der Formeln 1, 2 oder 3:

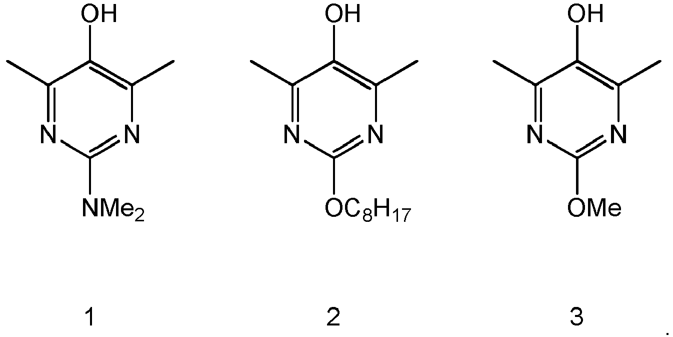

Die Aufgabe der Erfindung wird des Weiteren gelöst durch eine Reaktionsharzmischung, die einen phenolischen Inhibitor und ein säurefunktionalisiertes radikalisch polymerisierbares Harz mit wenigstens einer Säurefunktionalität umfasst. Hierbei ist die weitere Zugabe eines Gelierzeitstabilisators nicht erforderlich.

Das säurefunktionalisierte radikalisch polymerisierbare Harz ist erhältlich durch Umsetzen eines radikalisch polymerisierbaren Harzes mit einem Säureanhydrid einer wenigstens difunktionellen Säure, insbesondere eines Epoxy(meth)acrylats
Das radikalisch polymerisierbare Harz umfasst insbesondere ein Epoxy(meth)acrylat zur Erzeugung der Säurefunktionalität bei Reaktion mit dem Säureanhydrid einer wenigstens difunktionellen Säure.

Die wenigstens eine difunktionelle Säure ist insbesondere ausgewählt aus der Gruppe bestehend aus Itakonsäure, Maleinsäure, Zitronensäure und Kombinationen davon. Besonders bevorzugt umfasst die wenigstens eine difunktionelle Säure Itakonsäure oder ist Itakonsäure.

Das säurefunktionalisierte radikalisch polymerisierbare Harz ist erhältlich durch Umsetzen eines radikalisch polymerisierbaren Harzes mit einem Säureanhydrid einer wenigstens difunktionellen Säure. Insbesondere ist das säurefunktionalisierte radikalisch polymerisierbare Harz ist erhältlich durch Umsetzen von Epoxidgruppen aufweisenden organischen Verbindungen mit einem Zahlenmittel der Molmasse *M̅ₙ̅* im Bereich von 129 bis 2.400 g/Mol mit (Meth)acrylsäure und anschließendes teilweises Verestern der bei der Umsetzung gebildeten β-Hydroxylgruppen, wodurch Epoxy(meth)acrylatharze erhalten werden, mit dem Anhydrid einer gesättigten C₃-C₅-Dicarbonsäure. Die Epoxy(meth)acrylatharze weisen Hydroxylgruppen in 2-Position zur gebildeten Acryloxy- bzw. Methacryloxygruppe (im Folgenden auch β-Hydroxylgruppen genannt) in der Hauptkette des Moleküls auf. Zweckmäßig werden pro Epoxidäquivalent 0,7 bis 1,2 Carboxyläquivalente (Meth)acrylsäure eingesetzt. Die Epoxidgruppen aufweisenden organischen Verbindungen und die (Meth)acrylsäure werden dabei bevorzugt in etwa stöchiometrischen Verhältnissen eingesetzt, d.h. pro Epoxidäquivalent der organischen Verbindung wird etwa ein Äquivalent (Meth)acrylsäure eingesetzt. Die Umsetzung erfolgt in Gegenwart geeigneter, dem Fachmann hierfür bekannter Katalysatoren, wie quartären Ammoniumsalzen.

Als Epoxidgruppen aufweisende organische Verbindungen sind solche mit einem Molekulargewicht geeignet, das einem Zahlenmittel der Molmasse *M̅ₙ̅* im Bereich von 129 bis 2.400 g/Mol entspricht und die im Mittel mindestens eine, bevorzugt 1,5 bis 2 Epoxidgruppen pro Molekül enthalten. Besonders bevorzugt sind die Epoxidgruppen vom Glycidylether- oder Glycidylestertyp, die durch Umsetzen eines Epihalohydrins, insbesondere Epichlorhydrin, mit einer mono- oder multifunktionellen aliphatischen oder aromatischen Hydroxyverbindungen, Thiolverbindungen oder Carbonsäuren oder einem Gemisch davon erhalten werden. Die erhaltene Epoxidgruppen aufweisende organische Verbindung weist eine Epoxidäquivalentmasse (EEW) bevorzugt im Bereich von 87 bis 1.600 g/Val, stärker bevorzugt im Bereich von 160 bis 800 g/Val und am stärksten bevorzugt im Bereich von 300 bis 600 g/Val auf.

Beispiele geeigneter Epoxidgruppen aufweisender Verbindungen sind Polyglycidylether mehrwertiger Phenole wie beispielsweise Brenzkatechin, Resorcin, Hydrochinon, 4,4'-Dihydroxydiphenylmethan, 2,2-(4,4'Dihydroxydiphenyl)propan (Bisphenol-A), Bis(4-hydroxyphenyl)methan (Bisphenol F), 4,4'-Dihydroxydiphenylsulfon (Bisphenol S), 4,4'-Dihydroxydiphenylcyclohexan, Tris-(4-hydroxyphenyl)-methan, Novolaken (d.h. aus Umsetzungsprodukten von ein- oder mehrwertigen Phenolen mit Aldehyden, insbesondere Formaldehyd, in Gegenwart saurer Katalysatoren), wie Phenol-Novolak-Harz, Cresol-Novolak-Harz.

Weiter können folgende beispielhaft, jedoch nicht einschränkend, genannt werden: Glycidylether von Monoalkoholen, wie beispielsweise n-Butanol oder 2-Ethylhexanol; oder Glycidylether mehrwertiger Alkohole, wie beispielsweise aus 1,3-Butandiol, 1,4-Butandiol, 1,6-Hexandiol, Glycerin, Benzylalkohol, Neopentylglykol, Ethylenglykol, Cyclohexandimethanol, Trimethylolpropan, Pentaerythrit und Polyethylenglykolen, Triglycidylisocyanurat; Polyglycidylthioether mehrwertiger Thiole, wie Bismercaptomethylbenzol; oder Glycidylester von Monocarbonsäuren, wie Versaticsäure; oder Glycidylester mehrwertiger, aromatischer und aliphatischer Carbonsäuren, beispielsweise Phthalsäurediglycidylester, Isophthalsäurediglycidylester, Terephthalsäurediglycidylester, Tetrahydrophthalsäurediglycidylester, Adipinsäurediglycidylester und Hexahydrophthalsäurediglycidylester.

Als Epoxidgruppen aufweisende organische Verbindungen sind Diglycidylether zweiwertiger Hydroxyverbindungen der allgemeinen Formel (VI) besonders bevorzugt 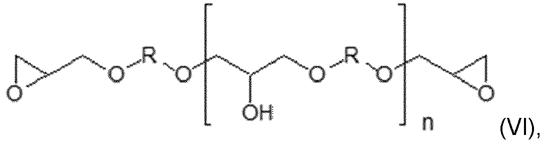 in der Reine unsubstituierte oder substituierte aliphatische oder aromatische Gruppe, bevorzugt eine aromatische Gruppe, stärker bevorzugt eine aromatische Gruppe mit 6 bis 24 Kohlenstoffatomen ist und der Mittelwert für n gleich 0 bis 3 ist. R ist besonders bevorzugt eine Gruppe vom Bisphenoltyp, wie Bisphenol A, Bisphenol F oder Bisphenol S, oder vom Novolaktyp, wobei eine Gruppe vom Bisphenoltyp ganz besonders bevorzugt ist. Der Mittelwert für n ist bevorzugt etwa 0,1, etwa 1 oder etwa 2. Dabei werden im Sinne der vorliegenden Erfindung Verbindungen, in denen n ∼ 0,1 ist, als monomer und Verbindungen, in denen n ∼ 1 oder 2 ist, als polymer bezeichnet.

Die polymeren Verbindungen haben gegenüber den monomeren Verbindungen den Vorteil, dass der Basisharzgehalt in der Harzmischung deutlich reduziert werden kann, was die Harzmischung wirtschaftlicher in der Herstellung macht, da hierdurch die Herstellungskosten reduziert werden können.

Die Herstellung der Epoxidgruppen aufweisenden organischen Verbindung kann entweder in Substanz oder in geeigneten Lösungsmitteln erfolgen, wobei als Lösungsmittel bevorzugt Reaktivverdünner verwendet werden, welche nachstehend näher erläutert werden.

Die modifizierten Epoxy(meth)acrylatharze werden erfindungsgemäß durch nur teilweise Veresterung der β-Hydroxylgruppen eines Epoxy(meth)acrylatharzes mit dem Anhydrid einer gesättigten C₃-C₅-Dicarbonsäure erhalten. Die gesättigte C₃-Cs-Dicarbonsäure ist unter Propandisäure (auch: Malonsäure), Butandisäure (auch: Bernsteinsäure) und Pentandisäure (auch: Glutarsäure) ausgewählt. Das Bernsteinsäureanhydrid ist erfindungsgemäß besonders bevorzugt.

Dabei hat bereits die Veresterung eines nur geringen Anteils derβ-Hydroxylgruppen einen positiven Effekt auf die Verbundtragfähigkeit unter Standardbedingungen (+20°C) und bei erhöhten Temperaturen (+40°C). Um eine höhere Verbundtragfähigkeit bei niedrigeren Temperaturen im Bereich von -10°C zu erreichen, ist ein höherer Modifizierungsgrad erforderlich, zumindest bei Verwendung der monomeren Epoxy(meth)acrylate.

Zweckmäßig werden zur Veresterung der β-Hydroxylgruppen des Epoxy(meth)acrylatharzes 1 bis 50 Mol%, bevorzugt 2 bis 30 Mol% und stärker bevorzugt 3 bis 15 Mol% Anhydrid der gesättigten C₃-C₅-Dicarbonsäure pro β-Hydroxylgruppe des Epoxy(meth)acrylatharzes eingesetzt.

Erfindungsgemäß fungiert das säurefunktionalisierte radikalisch polymerisierbare Harz gleichzeitig als reaktiver Bestandteil zum Vernetzen der härtbaren Harzkomponente als auch als Gelierzeitstabilisator. Es wurde erkannt, dass die für die Funktion als Gelierzeitstabilisator benötigte Säurefunktionalität nicht nur in einer eigenen Komponente zur härtbaren Harzkomponente zugesetzt werden kann, sondern auch gebunden im radikalisch polymerisierbaren Harz vorliegen kann.

Das Umsetzen des radikalisch polymerisierbaren Harzes mit dem Säureanhydrid einer wenigstens difunktionellen Säure wird insbesondere bei nur leicht erhöhten Temperaturen, und mit kurzen Reaktionszeiten durchgeführt, um eine ungewollte Vernetzung durch thermische Aktivierung des Harzes zu unterdrücken.

Beispielsweise erfolgt die Umsetzung bei einer Temperatur von 85 °C oder weniger und einer Reaktionszeit von 2 Stunden oder weniger.

In einer Variante ist das säurefunktionalisierte radikalisch polymerisierbare Harz erhältlich durch Umsetzen eines radikalisch polymerisierbaren Harzes mit einem Gelierzeitstabilisator im Verhältnis von 100 : 0,01 (w/w) bis 100 : 2 (w/w).

Entsprechend wird nur eine geringe Anzahl an Säurefunktionalitäten im Harz erzeugt, die jedoch ausreichend sind, um eine hinreichende Stabilisierung der Gelierzeit zu erreichen, insbesondere bei Verwendung der zuvor beschriebenen wenigstens difunktionellen Säuren, beispielsweise Itakonsäure. Auf diese Weise hat der Einbau der Säurefunktionalität im Harz nur unwesentlichen Einfluss auf dessen weitere Eigenschaften, sodass bereits bekannte Formulierungen auf einfache Weise angepasst werden können. Insbesondere kann eine übermäßige Vernetzung des Harzes über die Säurefunktionalität aufgrund des geringen Anteils verhindert werden.

Zum Justieren der Hafteigenschaften einer Zweikomponenten-Mörtelmasse, welche die eine der beiden erfindungsgemäßen Reaktionsharzmischungen enthält, kann die Reaktionsharzmischung zusätzlich eine ethylenisch ungesättigte Verbindung als Reaktivverdünner umfassen.

Beispielsweise kann der Reaktivverdünner ausgewählt sein aus der Gruppe bestehend aus Styrol, alpha-Methylstyrol, 4-Vinyltoluol, Divinylbenzol, (Meth)acrylamid, Methyl(meth)acrylat, Ethyl(meth)acrylat, Propyl(meth)acrylat, Butyl(meth)acrylat, Ethylhexyl(meth)acrylat, Neopentylglykol(meth)acrylat, Ethylenglykoldi(meth)acrylat, Diethylenglykoldi(meth)acrylat, Polyethylenglykol(meth)acrylat, Propylenglykoldi(meth)acrylat, Butandioldi(meth)acrylat, Glycerin(meth)acrylat, Hydroxyethyl(meth)acrylat, Hydroxypropyl(meth)acrylat, Acetoacetatoethyl(meth)acrylat, alkoxyliertes Bisphenol-A-di(meth)acrylate, Glycidylmethacrylat und Kombinationen davon.

Die Reaktionsharzmischung kann als weitere Komponenten nicht-phenolische Inhibitoren, Beschleuniger und/oder Additive umfassen.

Als nicht-phenolischen Stabilisator kann die Harzkomponente eine N-Oxylverbindung und/oder einen heterocyclischen Stabilisator enthalten, wobei als N-Oxylverbindungen Piperidinyl-N-oxyl-Derivate und Tetrahydropyrrol-N-oxyl-Derivate bevorzugt sind, während als bevorzugter heterocyclischer Stabilisator Phenothiazin eingesetzt wird. Das bevorzugte Piperidin-N-oxyl-Derivat ist 4-Hydroxy-2,2,6,6-tetramethyl-piperidin-N-oxyl.

Als Beschleuniger kann mindestens ein tertiäres N,N-substituiertes Anilin, tertiäres N,N-substituiertes Toluidin und/oder ein alkoxyliertes Derivat davon eingesetzt werden, wie beispielsweise N,N-Dimethylanilin, N,N-Diethylanilin, N-Ethyl-N-(hydroxyethyl)-anilin, N,N-Dimethyl-p-toluidin, N-Methyl-N-(hydroxyethyl)-p-toluidin, N,N-Diisopropyliden-p-toluidin, Di(hydroxyethyl)-p-toluidin, Di(hydroxyethyl)-m-toluidin und/oder ethoxyliertes Di(hydroxyethyl)-p-toluidin.

Aus der erfindungsgemäßen Reaktionsharzmischung, welche das radikalisch polymerisierbare Harz und den Gelierzeitstabilisator enthält, wie auch aus der alternativen erfindungsgemäßen Reaktionsharzmischung, welche das säurefunktionalisiertes radikalisch polymerisierbares Harz mit wenigstens einer Säurefunktionalität enthält, lassen sich Harzkomponenten für einen Zweikomponenten-Mörtelmasse herstellen, die ebenfalls eine stabile Gelierzeit aufweisen.

Ein weiterer Gegenstand der Erfindung ist somit eine Harzkomponente, mit einer der beiden hierin beschriebenen Reaktionsharzmischungen und Füllstoffen, insbesondere anorganischen Füllstoffen.

Als Füllstoff kommen alle für Injektionsmörtel im Stand der Technik üblicherweise verwendeten Verbindungen in Frage, wie Quarz, Sand, pyrogene Kieselsäure, Korund, Kreide, Talkum, Keramik, Tonerde, Glas, Zement, Leichtspat und/oder Schwerspat in geeigneter Teilchengrößenverteilung. Dabei kann bei der Verwendung von Zement als Füllstoff vorzugsweise Portlandzement, Aluminatzement und/oder Gips verwendet werden.

Weiterhin kann die Harzkomponente als Verdickungsmittel pyrogene Kieselsäure, Schichtsilikate, Acrylat- und/oder Polyurethanverdicker, Rizinusölderivate, Neuburger Kieselerde und/oder Xanthangummi enthalten, um dem Material die erforderliche Viskosität zu verleihen.

Gemäß einer bevorzugten Ausführungsform enthält die Harzkomponente 8 bis 25 Gewichtsprozent radikalisch polymerisierbares Harz, 8 bis 25 Gewichtsprozent Reaktivverdünner, 0,01 bis 10 Gewichtsprozent Beschleuniger, 0,001 bis 5 Gewichtsprozent Stabilisator/Inhibitor, 20 bis 90 Gewichtsprozent Füllstoff und 0,5 bis 5 Gewichtsprozent Verdickungsmittel, bezogen auf das Gesamtgewicht der Harzkomponente.

Die Harzkomponente kann als härtbare Komponente in einer Zweikomponenten-Mörtelmasse mit geringer Gelzeitdrift, d.h. mit einer stabilen Gelzeit, verwendet werden.

Daher ist ein weiterer Gegenstand der Erfindung eine Zweikomponenten-Mörtelmasse, mit einer hierin beschriebenen Harzkomponente, welche den Gelierzeitstabilitator enthält, und mit einer Härterkomponente, wobei die Härterkomponente ein Peroxid umfasst.

Das Peroxid der Härterkomponente ist insbesondere ein organisches Peroxid, wie Dibenzoylperoxid, Methylethylketonperoxid, tert-Butylperbenzoat, Cyclohexanonperoxid, Laurylperoxid, Cumolhydroperoxid und/oder tert-Butylperoxy-2-ethylhexanoat.

Die Härterkomponente kann analog zur härtbaren Harzkomponente als weitere Komponenten Füllstoffe, Verdickungsmittel und/oder Additive umfassen, wobei die gleichen Stoffe zum Einsatz kommen können wie zuvor für die Harzkomponente beschrieben.

Die Härterkomponente kann ferner zur Einstellung der Viskosität 5 Gewichtsprozent oder weniger mindestens eines organischen Lösungsmittels umfassen, beispielsweise ein Glykol, Glycerin und/oder ein wasserlösliches, mit dem radikalisch polymerisierbaren Harz copolymerisierbares Polyethylenglykol- und/oder Polypropylenglykol-Derivat.

Ferner kann die Härterkomponenten noch einen Weichmacher, etwa als Phlegmatisierungsmittel, enthalten, wie flüssige Ester von Mono- oder Dicarbonsäuren, z.B. der Benzoe-, Phthal- oder Adipinsäure sowie Polyalkohole (Ethylenglykol, Propylenglykol, Glycerin) oder Oligoethylen- bzw. Oligopropylenglykole der Molmassen bis 500g/mol.

Gemäß einer bevorzugten Ausführungsform enthält die Härterkomponente 0,25 bis 35 Gewichtsprozent Peroxid, 10 bis 35 Gewichtsprozent Wasser oder eines organischen Weichmachers, 15 bis 70 Gewichtsprozent Füllstoff und 0 bis 15 Gewichtsprozent Zusatzstoffe, wie etwa Verdickungsmittel, bezogen auf Gesamtgewicht der Härterkomponente.

Weitere Vorteile und Eigenschaften der Erfindung ergeben sich aus der nachfolgenden Beschreibung und den gezeigten Beispielen, die nicht in einem einschränkenden Sinne verstanden werden sollen.

In Tabelle 1 sind erfindungsgemäße Beispiele sowie analoge Referenzbeispiele angeführt. Die in Tabelle 1 angeführten Bestandteile sind den in Tabelle 2 aufgeführten Funktionen zugeordnet. Die Bestandteile der Reaktionsharzmischungen sind in Tabelle 1 in Gewichtsprozent angegeben, bezogen auf das Gesamtgewicht der Reaktionsharzmischung.

**Tabelle 2: Bezeichnung der Bestandteile.**

| Abkürzung | Funktion |
|---|---|
| A1 | Radikalisch polymerisierbares Harz |
| A2 | Säurefunktionalisiertes radikalisch polymerisierbares Harz |
| B | Reaktivverdünner |
| C | Beschleuniger |
| D | Stabilisator |
| E | Säure |
| F | Härterkomponente |

### Herstellung der Beispiele und Messung der Gelierzeit

Die Reaktionsharzmischungen für die Beispiele sowie für die Referenzbeispiele aus Tabelle 1 werden wie folgt hergestellt.

Die jeweiligen Bestandteile werden in einem Becher zusammengegeben und auf einem Magnetrührer bei 50°C bis zur Homogenität gerührt.

Nach dem Temperieren des Harzes auf 25°C wurden Kunststoffbecher 50 g des zu untersuchenden Reaktivharzes und die entsprechende Menge an Härter (Perkadox 20S) gemäß Tabelle 1 abgewogen. Da das System empfindlich auf Umgebungstemperatur reagiert, müssen die Komponenten auf 25 °C temperiert werden. Die Temperierung erfolgte in einem Thermostaten (B12/C11 Prüfgerätewerk Medingen GmbH). Die Messung wurde unmittelbar vor dem Mischen der Reaktionskomponenten gestartet. Der Härter wurde der vorgelegten Harzkomponente zugegeben und mittels Holzspatel für 40 s gut verrührt. Die Mischung wurde in zwei Reagenzgläser ca. 6 cm hoch eingefüllt, diese separat jeweils in einen im Thermostaten befindlichen Messzylinder eingehängt. Anschließend wurde jeweils ein mit Silikonpaste eingestrichener Temperatursensor (K-Typ, 150 mm lang Ø 1,5 mm) mittig 2 cm tief in die Mischung eingetaucht. Da die Umgebungstemperatur bis zum Zeitpunkt des Eintauchens der Sensoren registriert wurde, ist der Kurvenverlauf am Anfang der Messung nicht relevant, weshalb die Temperatur-Zeit-Kurven erst ab 100 Sekunden für die Auswertung verwendet wurden. Der Temperaturverlauf wurde mittels der Sensoren, die an einem Voltkraft Datalogger K202 (verbunden mit PC) angeschlossen sind, registriert. Als Ergebnisse wurden in dem Kurvenverlauf die Höchsttemperatur der Kurve (Tmax), sowie die Zeit bei 35 °C abgelesen. Es wurde eine Doppelbestimmung durchgeführt und der Mittelwert beider Messungen angegeben.

Aus den Beispielen wird ersichtlich, dass die Gelierzeit im Fall der erfindungsgemäßen Beispiele 1 bis 4 sowohl nach Lagerung über 30 Tage als auch nach Lagerung über 60 Tage in einem Bereich von ± 10 % der Ausgangs-Gelierzeit bleibt. Im Gegensatz dazu ist eine deutliche verkürzte Gelierzeit im Fall der Referenzbeispiele zu beobachten.

**Tabelle 1: Formulierungen der Referenzbeispiele (Ref.) und der erfindungsgemäßen Beispiele. (Angaben in Gew.-% soweit nicht anders angegeben)**

| | | Ref. 1 | Beispiel 1 | Ref. 2 | Beispiel 2 | Ref. 3 | Beispiel 3 | Beispiel 4 | Beispiel 5 |
|---|---|---|---|---|---|---|---|---|---|
| Urethanmethacrylat*) | A1 | 40 | 40 | | | | | | |
| Vinylesterharz (bisGMA)**) | A1 | | | | | 40 | 40 | | |
| Vinylesterharz (bisGMA; modifiziert mit MSA)***) | A2 | | | | | | | 40 | |
| Vinylesterharz (E2BADMA)****) | A1 | | | 70 | 70 | | | | 68 |
| 1,4-Butandioldimethacrylat (BDDMA) | B | 38,4 | 38,1 | | | 38,3 | 37,8 | 38,3 | |
| Diethylenglykoldimethacrylat | B | | | 28,4 | 28,1 | 20 | 20 | 20 | 18,2 |
| Hydroxyethylmethacrylat | B | 20 | 20 | | | | | | 10 |
| Bisomer PTE | C | 1,5 | 1,5 | 1,5 | 1,5 | 1,3 | 1,3 | 1,3 | 1,7 |
| Butylhydroxytoluol | D | 0,1 | 0,1 | | | | | | |
| 4-tert.-Butylbrenzkatechin | D | | | | | 0,1 | 0,1 | 0,1 | 0,1 |
| 3,5-Di-tert.-Butylbrenzkatechin | D | | | 0,1 | 0,1 | | | | |
| Zitronensäure | E | | 0,3 | | | | | | |
| Itakonsäure | E | | | | | | 0,5 | | |
| Phosphorsäure | E | | | | 0,3 | | | | |
| Copolymer mit sauren Gruppen (Disperbyk 111, Fa. BYK)) | | | | | | | | | 2 |
| | | 100 | 100 | 100 | 100 | 100 | 100 | 100 | |
| | | | | | | | | | |
| BP20S (20% Benzoylperoxid auf Gips; Fa. Nouryon) [phr]¹⁾ | F | 6 phr | 6 phr | 8,6 phr | 8,6 phr | 8,6 phr | 8,6 phr | 8,6 phr | 7,5 phr |

| | | | | | | | | | |
|---|---|---|---|---|---|---|---|---|---|
| *) hergestellt gemäß Beispiel 3 der EP 0 713 015 A1 **) erhältlich als Mischung mit 20 Gew.-% BDDMA ("Ecocryl 05345", Fa. Hexion); oder bisGMA: Bisphenol A-Diglycidylether-Methacrylat ***) erhältlich durch Erhitzen (1h bei 80 °C) einer Mischung aus Ecocryl 05345 mit 2 Gew.-% Maleinsäureanhydrid (MSA) ****) ethoxyliertes Bisphenol-A-Methacrylat (E2BADMA), erhältlich unter der Bezeichnung "Sartomer SR 348L" ¹⁾ phr = parts per hundred resin | | | | | | | | | |

**Tabelle 2: Gelierzeiten der Referenzbeispiele und Beispiele aus Tabelle 1.**

| | Ref. 1 | | Beispiel 1 | | Ref. 2 | | Beispiel 2 | | Ref. 3 | | Beispiel 3 | | Beispiel 4 | | Beispiel 5 | |
|---|---|---|---|---|---|---|---|---|---|---|---|---|---|---|---|---|
| | [min] | [%] | [min] | [%] | [min] | [%] | [min] | [%] | [min] | [%] | [min] | [%] | [min] | [%] | [min] | [%] |
| Gelierzeit @ 25°C | 3,2 | | 4,3 | | 4,3 | | 3,8 | | 4,2 | | 4,6 | | 4,8 | | 6,0 | |
| nach 30d Lagerung | 2,75 | 86 | 4,1 | 95 | 3,9 | 91 | 4 | 105 | 2,1 | 50 | 4,5 | 98 | 5,1 | 106 | 5,8 | 97 |
| nach 60d Laqerunq | 2,25 | 70 | 4,6 | 107 | 3,5 | 81 | 4 | 105 | 1,4 | 33 | 4,4 | 96 | 5 | 104 | 6,1 | 102 |

Aus den erfindungsgemäßen Reaktionsharzmischungen lassen sich Harzkomponenten herstellen, in dem zu 40 Gewichtsprozent der jeweiligen Reaktionsharzmischung gemäß Tabelle 1, 37 Gewichtsprozent Quarzsand, 20 Gewichtsprozent Aluminatzement und 3 Gewichtsprozent pyrogene Kieselsäure gegeben werden. Die Bestandteile werden in einem Plastikbecher von Hand mittels Holzspatel vorgemischt und dann im Speedmixer 90 Sekunden lang bei 1500 Upm homogenisiert.

Diese Harzkomponente kann als Harzkomponente in einer Zweikomponenten-Mörtelmasse dienen. Als Härterkomponenten kann etwa eine B-Komponente eines kommerziell erhältlichen Mörtels, wie Hilti HIT HY- 170-B dienen. Zur Herstellung des Zweikomponenten-Mörtelmasse werden die die Harzkomponente und die Härterkomponente in eine Zweikomponenten-Kunststoffkartusche im Mischungsverhältnis 3:1 abgefüllt. Es können nach Anpassung der Rezeptur auch abweichende Mischungsverhältnisse, z.B 2:1 oder 10:1, verwendet werden.

Die Zweikomponenten-Mörtelmassen weisen eine stabile Gelzeit auf und können zur Befestigung von Elementen in mineralischen oder anderen Untergründen verwendet werden.

## Patentansprüche

1. Reaktionsharzmischung, mit einem radikalisch polymerisierbaren Harz, einem phenolischen Inhibitor und einem Gelierzeitstabilisator mit wenigstens einer Säurefunktionalität.

2. nach Anspruch 1, wobei der Gelierzeitstabilisator eine wenigstens difunktionelle organische Säure und/oder eine wenigstens zweiprotonige anorganische Säure umfasst.

3. Reaktionsharzmischung nach Anspruch 2, wobei der Gelierzeitstabilisator ausgewählt ist aus der Gruppe bestehend aus Itakonsäure, Maleinsäure, Zitronensäure, Phosphorsäure, Oligomeren mit sauren Gruppen, (Co)polymeren mit sauren Gruppen und Kombinationen davon.

4. Reaktionsharzmischung nach Anspruch 3, wobei das (Co)polymere mit sauren Gruppen ein säurefunktionalisiertes radikalisch polymerisierbares Harz mit wenigstens einer Säurefunktionalität ist.

5. Reaktionsharzmischung nach einem der vorhergehenden Ansprüche, wobei der Gelierzeitstabilisator in einem Anteil von 0,05 bis 3 Gewichtsprozent in der Reaktionsharzmischung vorliegt, bezogen auf die Gesamtmasse der organischen Bestandteile der Reaktionsharzmischung.

6. Reaktionsharzmischung nach einem der vorhergehenden Ansprüche, wobei der phenolische Inhibitor aus der Gruppe bestehend aus Phenolen, Hydrochinon und Derivaten davon, Benzochinon und Derivaten davon, Naphtochinon, Brenzkatechin und Derivaten davon, 3-Pyridinol-Derivaten, 5-Pyrimidinol-Derivaten, und Kombinationen davon ausgewählt ist.

7. Reaktionsharzmischung nach einem vorhergehenden Ansprüche, wobei das radikalisch polymerisierbare Harz ausgewählt ist aus der Gruppe bestehend aus ungesättigten Polyestern, Vinylestern, Urethan(meth)acrylaten, Epoxy(meth)acrylaten, Methacrylaten von alkoxylierten Bisphenolen und Kombinationen davon.

8. Reaktionsharzmischung nach einem der vorhergehenden Ansprüche, die ferner härtbare Harzkomponente eine ethylenisch ungesättigte Verbindung als Reaktivverdünner umfasst.

9. Reaktionsharzmischung, mit einem säurefunktionalisierten radikalisch polymerisierbaren Harz mit wenigstens einer Säurefunktionalität und einem phenolischen Inhibitor, wobei das säurefunktionalisierte radikalisch polymerisierbare Harz erhältlich ist durch Umsetzen eines radikalisch polymerisierbaren Harzes mit einem Säureanhydrid einer wenigstens difunktionellen Säure.

10. Reaktionsharzmischung nach Anspruch 9, wobei das radikalisch polymerisierbare Harz ein Epoxy(meth)acrylat umfasst.

11. Reaktionsharzmischung nach Anspruch 9 oder 10, wobei die wenigstens difunktionelle organische Säure ausgewählt ist aus der Gruppe bestehend aus Itakonsäure, Maleinsäure, Zitronensäure und Kombinationen davon.

12. Reaktionsharzmischung nach einem der Ansprüche 9 bis 11, wobei das säurefunktionalisierte radikalisch polymerisierbare Harz erhältlich ist durch Umsetzen eines radikalisch polymerisierbaren Harzes mit einem Gelierzeitstabilisator im Verhältnis von 100 : 0,01 (w/w) bis 100 : 2 (w/w).

13. Reaktionsharzmischung nach einem der Ansprüche 9 bis 12, die ferner eine ethylenisch ungesättigte Verbindung als Reaktivverdünner enthält.

14. Harzkomponente, mit einer Reaktionsharzmischung nach einem der Ansprüche 1 bis 8 oder einem der Ansprüche 9 bis 13 und mit anorganischen Füllstoffen.

15. Zweikomponenten-Mörtelmasse, mit einer Harzkomponente nach Anspruch 14 und einer getrennt angeordneten Härterkomponente, wobei die Härterkomponente ein Peroxid umfasst.

16. Zweikomponenten-Mörtelmasse nach Anspruch 16, **dadurch gekennzeichnet, dass** das Peroxid ein organisches Peroxid ist.
